# EUROPÄISCHE PATENTSCHRIFT

(11) **EP 2 532 067 B1**
(45) Veröffentlichungstag und Bekanntmachung des Hinweises auf die Patenterteilung: **13.03.2019**
(21) Anmeldenummer: 11700008.3
(22) Anmeldetag: 03.01.2011
(51) Int. Cl.: H02J 7/00, B60L 11/18

(54) **BATTERIE MIT AUSWÄHLBARER ZAHL VON BATTERIEZELLEN**
BATTERY HAVING A SELECTABLE NUMBER OF BATTERY CELLS
BATTERIE PRÉSENTANT UN NOMBRE DE CELLULES DE BATTERIE QUI PEUT ÊTRE SÉLECTIONNÉ

(30) Priorität: 04.02.2010 DE 102010001574
(43) Veröffentlichungstag der Anmeldung: 12.12.2012
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE)
(74) Vertreter: Bee, Joachim
(86) Internationale Anmeldenummer: PCT/EP2011/050012
(87) Internationale Veröffentlichungsnummer: WO 2011/095366

(56) Entgegenhaltungen:
- EP-A1- 1 462 299
- WO-A1-2008/127137
- US-A1- 2005 127 871

## Beschreibung

Die Erfindung betrifft eine Batterie mit auswählbarer Zahl von Batteriezellen.

### Stand der Technik

Das Dokument US2005/0127871 zeigt ein Batteriemodul mit einer ersten Batteriezelle, einem DC/DC Umsetzer und einer Anzahl von in Serie geschalteten zweiten Batteriezellen. Die erste Batteriezelle wird durch die zweiten Batteriezellen mittels des DC/DC-Umsetzers aufgeladen. Es besteht ein wachsender Bedarf an Batteriesystemen, welche in stationären Anwendungen wie Windkraftanlagen und Notstromsystemen oder aber in Fahrzeugen als Antriebsbatterie zum Einsatz kommen sollen. Alle diese Anforderungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage so vor übermäßigen mechanischen Belastungen zu schützen, die die Windkraftanlage beschädigen oder sogar zerstören können. Im Falle des Ausfalls der Batterie eines Elektroautos würde dieses fahruntüchtig. Ein Notstromsystem wiederum soll gerade den unterbrechungsfreien Betrieb z. B. eines Krankenhauses sicherstellen und daher selbst möglich nicht ausfallen dürfen.

Um die für die jeweilige Anwendung geforderte Leistung und Energie zur Verfügung stellen zu können, werden einzelne Batteriezellen in Serie und teilweise zusätzlich parallel geschaltet. Um die beispielsweise in einem PKW für den Elektromotor erforderliche hohe Betriebsspannung durch Summierung der Spannung von Einzelzellen zu erreichen, wird üblicherweise eine hohe Anzahl Batteriezellen in Serie geschaltet. Aufgrund der durch die Wahl einer bestimmten Batterietechnologie (beispielsweise Lithium-Ionen-Batteriezellen) vorgegebene Spannung einer Batteriezelle, ist auch die Anzahl der in Serie geschalteten Batteriezellen durch die gewünschte Ausgangsspannung der Batterie festgelegt.

Das Problem dabei ist, dass bei Annahme eines gegebenen Energieinhaltes einer Batteriezelle auch die maximale in der Batterie speicherbare Energie vorgegeben ist, was wiederum direkt weitere wichtige Fahrzeugparameter wie die Reichweite festlegt. Wird nun eine Batterie mit einem höheren Energieinhalt gefordert, so muss die Anzahl der Batteriezellen der Batterie erhöht werden, was jedoch die Anforderung an die Batteriespannung verletzen würde. Aus diesem Grund wird gewöhnlich ein zweiter Batteriestrang mit derselben Anzahl Batteriezellen parallel zum ersten Batteriestrang vorgesehen. Es versteht sich, dass dabei der Energieinhalt der Batterie gleich verdoppelt wird (bzw. bei Verwendung von noch mehr Batteriesträngen um einen entsprechenden Faktor erhöht wird). Dies ist jedoch sehr unflexibel und aus Kostengründen u. U. gar nicht erwünscht. Es besteht daher ein Bedarf an einer Möglichkeit, die in einer Batterie gespeicherte bzw. speicherbare Energie frei zu bestimmen.

### Offenbarung der Erfindung

Ein erster Aspekt der Erfindung führt daher eine Batterie mit einem ersten Batteriemodul, welches eine erste Anzahl von zwischen einen ersten Pol des ersten Batteriemoduls und einen zweiten Pol des ersten Batteriemoduls in Serie geschalteten ersten Batteriezellen aufweist, ein. Erfindungsgemäß besitzt das erste Batteriemodul einen ersten DC/DC-Umsetzer und eine zweite Anzahl von zweiten Batteriezellen, die unmittelbar zwischen einen ersten Eingang und einen zweiten Eingang des ersten DC/DC-Umsetzers in Serie geschaltet sind. Ein erster Ausgang des ersten DC/DC-Umsetzers ist mit dem ersten Pol des ersten Batteriemoduls und ein zweiter Ausgang des ersten DC/DC-Umsetzers mit dem zweiten Pol des ersten Batteriemoduls verbunden.

Indem der DC/DC-Umsetzer die Spannung der seriengeschalteten zweiten Batteriezellen an die Spannung der seriengeschalteten ersten Batteriezellen anpasst, kann unabhängig von einer feststehenden Ausgangsspannung der Batterie eine freie Zahl von Batteriezellen kombiniert und somit der Energieinhalt der Batterie frei gewählt werden.

Die Erfindung erlaubt es außerdem, Batteriezellen unterschiedlicher Technologien wie etwa Nickel-Metallhydrid oder Lithium-Ionen-Batteriezellen, welche verschiedene Zellspannungen und Zellspannungsverläufe aufweisen, zu kombinieren. Bei einer Ausführungsform der Erfindung weisen daher die ersten Batteriezellen eine erste Zellspannung und die zweiten Batteriezellen eine von der ersten Zellspannung verschiedene zweite Zellspannung auf. Dabei kann die erste Anzahl der ersten Batteriezellen gleich der zweiten Anzahl der zweiten Batteriezellen sein.

Bevorzugt unterscheidet sich jedoch die zweite Anzahl der zweiten Batteriezellen von der ersten Anzahl der ersten Batteriezellen.

Besonders bevorzugt ist die zweite Anzahl dabei kleiner als die erste Anzahl. Dabei wird die Gesamtzahl von Batteriezellen zwischen der ersten Anzahl und dem Doppelten der ersten Anzahl des Falles mit zwei parallelen Strängen von Batteriezellen einstellbar. Es ist jedoch auch denkbar, dass die zweite Anzahl größer als die erste Anzahl ist, insbesondere dann, wenn für die zweiten Batteriezellen eine Technologie mit einer geringeren Zellspannung verwendet wird als für die ersten Batteriezellen.

Bevorzugt weist die Batterie mehrere gleich oder ähnlich beschaffene Batteriemodule auf, welche ausgangsseitig und optional eingangsseitig in Serie geschaltet sind. Eine Ausführungsform der erfindungsgemäßen Batterie verfügt daher über wenigstens ein zweites Batteriemodul, welches eine dritte Anzahl von zwischen einen ersten Pol des zweiten Batteriemoduls und einen zweiten Pol des zweiten Batteriemoduls in Serie geschalteten dritten Batteriezellen aufweist. Dabei besitzt das zweite Batteriemodul einen zweiten DC/DC-Umsetzer und eine vierte Anzahl von vierten Batteriezellen, die zwischen einen ersten Eingang und einen zweiten Eingang des zweiten DC/DC-Umsetzers in Serie geschaltet sind. Ein erster Ausgang des zweiten DC/DC-Umsetzers ist mit dem ersten Pol des zweiten Batteriemoduls und ein zweiter Ausgang des zweiten DC/DC-Umsetzers mit dem zweiten Pol des zweiten Batteriemoduls verbunden. Der erste Pol des zweiten Batteriemoduls ist mit dem zweiten Pol des ersten Batteriemoduls verbunden.

Die dritte und die vierte Anzahl von Batteriezellen kann dabei unabhängig von der ersten Anzahl und der zweiten Anzahl gewählt werden. Aus Gründen der Produktionsrationalität sind jedoch bevorzugt die dritte Anzahl gleich der ersten Anzahl und die vierte Anzahl gleich der zweiten Anzahl. Dadurch ergeben sich gleichartige Batteriemodule, die in großer Zahl hergestellt und durch Wahl einer entsprechenden Anzahl von Batteriemodulen zu Batterien zusammengefügt werden können, die die für den jeweiligen Einsatzzweck geeignete Ausgangsspannung und Energieinhalt aufweisen.

Der erste DC/DC-Umsetzer kann ausgebildet sein, den zweiten Batteriezellen elektrische Energie zu entnehmen und den ersten Batteriezellen über eine Aufladespannung zuzuführen. Dadurch kann die Ausgangsspannung der Batterie über einen längeren Zeitraum stabil gehalten werden, weil die ersten Batteriezellen aus den zweiten Batteriespannungen wieder aufgeladen werden können. Andernfalls würde die Ausgangsspannung der ersten Batteriezellen mit zunehmender Entladung (und zu einem früheren Zeitpunkt) abnehmen. Entsprechend können bei Ausführungen der Batterie mit mehr als einem Batteriemodul auch die DC/DC-Umsetzer der weiteren Batteriemodule ausgebildet sein, den mit den Eingängen des DC/DC-Umsetzers verbundenen Batteriezellen elektrische Energie zu entnehmen und den ausgangsseitig an die DC/DC-Umsetzer angeschlossenen Batteriezellen über eine Aufladespannung zuzuführen.

Ein zweiter Erfindungsaspekt betrifft ein Kraftfahrzeug mit einem elektrischen Antriebsmotor zum Antreiben des Kraftfahrzeuges und einer mit dem elektrischen Antriebsmotor verbundenen Batterie nach dem ersten Erfindungsaspekt.

### Zeichnungen

Die Erfindung wird im Folgenden anhand von Abbildungen von Ausführungsbeispielen näher erläutert. Es zeigen:
Fig. 1 eine Batterie mit einem Batteriemodul; und
Fig. 2 ein Ausführungsbeispiel mit einer Mehrzahl von Batteriemodulen.

### Ausführungsformen der Erfindung

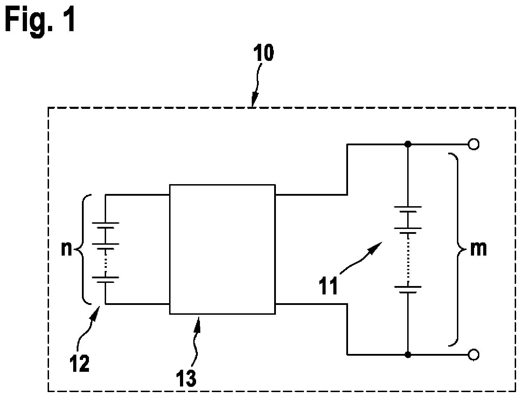

Fig. 1 zeigt eine Batterie mit einem Batteriemodul 10. Das Batteriemodul 10 verfügt über eine erste Anzahl m erste Batteriezellen, welche zwischen die Ausgänge des Batteriemoduls 10 in Serie geschaltet sind und eine entsprechende Ausgangsspannung des Batteriemoduls 10 und somit der Batterie erzeugen. Außerdem verfügt das Batteriemodul 10 über eine zweite Anzahl n zweiter Batteriezellen, welche zwischen die Eingänge eines DC/DC-Umsetzers 13 in Serie geschaltet sind. Die Anzahl n unterscheidet sich von der Anzahl m und ist bevorzugt kleiner als letztere. Der DC/DC-Umsetzer 13 ist ausgangsseitig mit den Ausgängen des Batteriemoduls 10 und somit mit den m ersten Batteriezellen 11 verbunden. Der DC/DC-Umsetzer 13 ist ausgebildet, den n zweiten Batteriezellen 12 elektrische Energie zu entnehmen und daraus eine der Ausgangsspannung des Batteriemoduls 10 wenigstens entsprechende Spannung zu generieren. Der DC/DC-Umsetzer 13 kann auch ausgebildet sein, die ersten Batteriezellen 11 aus den zweiten Batteriezellen 12 aufzuladen, indem er den zweiten Batteriezellen 12 elektrische Energie entnimmt und den ersten Batteriezellen 11 über eine Aufladespannung zuführt.

Beispielsweise kann für den Einsatz in einem Kraftfahrzeug mit elektrischem Antriebsmotor, welcher z. B. bei Abbremsen des Kraftfahrzeuges als elektrischer Generator dienen kann, oder aber mit einem zusätzlichen Verbrennungsmotor, welcher einen elektrischen Generator antreiben kann, vorteilhafterweise vorgesehen sein, dass der DC/DC-Umsetzer ausgebildet ist, aus einer an den Ausgängen des Batteriemoduls 10 anliegenden Spannung eine Aufladespannung für die zweiten Batteriezellen 12 zu erzeugen. In diesem Fall kann eine im Generatorbetrieb der Batterie zugeführte Aufladeenergie auf die ersten Batteriezellen 11 und die zweiten Batteriezellen 12 in einem gewünschten Verhältnis verteilt werden.

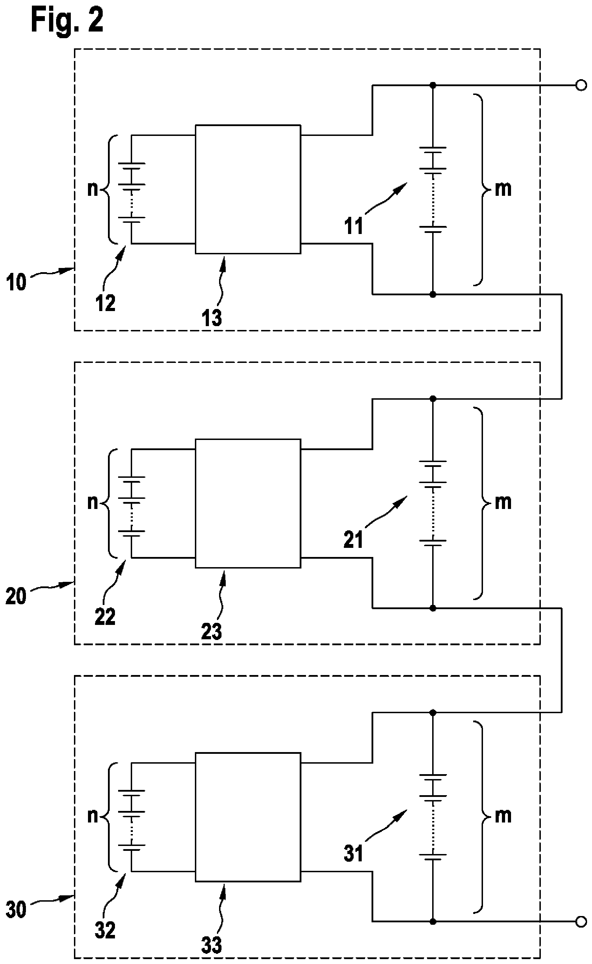

Fig. 2 zeigt ein Ausführungsbeispiel mit einer Mehrzahl von Batteriemodulen. Prinzipiell kann alles zu Fig. 1 Gesagte auch auf das Ausführungsbeispiel der Fig. 2 übertragen werden. Das Ausführungsbeispiel der Fig. 2 unterscheidet sich von dem der Fig. 1 im Wesentlichen dadurch, dass eine Mehrzahl von Batteriemodulen in der Batterie verschaltet werden. Im gezeigten Beispiel sind drei Batteriemodule 10, 20, 30 vorgesehen, prinzipiell sind aber auch zwei Batteriemodule oder eine höhere Anzahl von Batteriemodulen vorstellbar. Die Komponenten der einzelnen Batteriemodule (die ersten Batteriezellen 11, 21, 31; die zweiten Batteriezellen 12, 22, 32; und die DC/DC-Umsetzer 13, 23, 33) und damit die Batteriemodule 10, 20, 30 sind bevorzugt identisch aufgebaut, können aber auch unterschiedlich dimensioniert sein, indem z. B. unterschiedliche Zahlen von ersten und/oder zweiten Batteriezellen gewählt werden.

## Patentansprüche

1. Eine Batterie mit einem ersten Batteriemodul (10), welches eine erste Anzahl (m) von zwischen einen ersten Pol des ersten Batteriemoduls (10) und einen zweiten Pol des ersten Batteriemoduls (10) in Serie geschalteten ersten Batteriezellen (11) aufweist, wobei das erste Batteriemodul (10) einen ersten DC/DC-Umsetzer (13) und eine zweite Anzahl (n) von zweiten Batteriezellen (12) besitzt, wobei die zweiten Batteriezellen (12) unmittelbar zwischen einen ersten Eingang und einen zweiten Eingang des ersten DC/DC-Umsetzers (13) in Serie geschaltet sind, wobei ein erster Ausgang des ersten DC/DC-Umsetzers (13) mit dem ersten Pol des ersten Batteriemoduls (10) und ein zweiter Ausgang des ersten DC/DC-Umsetzers (13) mit dem zweiten Pol des ersten Batteriemoduls (10) verbunden sind.

2. Die Batterie von Anspruch 1, bei der die ersten Batteriezellen (11) eine erste Zellspannung und die zweiten Batteriezellen (12) eine von der ersten Zellspannung verschiedene zweite Zellspannung aufweisen.

3. Die Batterie von Anspruch 2, bei der die erste Anzahl (n) gleich der zweiten Anzahl (m) ist.

4. Die Batterie von einem der Ansprüche 1 oder 2, bei der sich die zweite Anzahl (n) von der ersten Anzahl (m) unterscheidet.

5. Die Batterie von Anspruch 4, bei der die zweite Anzahl (n) kleiner als die erste Anzahl (m) ist.

6. Die Batterie von einem der vorhergehenden Ansprüche, mit wenigstens einem zweiten Batteriemodul (20, 30), welches eine dritte Anzahl von zwischen einen ersten Pol des zweiten Batteriemoduls (20, 30) und einen zweiten Pol des zweiten Batteriemoduls (20, 30) in Serie geschalteten dritten Batteriezellen (21, 31) aufweist, wobei das zweite Batteriemodul (20, 30) einen zweiten DC/DC-Umsetzer (23, 33) und eine vierte Anzahl von vierten Batteriezellen (22, 32) besitzt, wobei die vierten Batteriezellen (22, 32) zwischen einen ersten Eingang und einen zweiten Eingang des zweiten DC/DC-Umsetzers (23, 33) in Serie geschaltet sind, wobei ein erster Ausgang des zweiten DC/DC-Umsetzers (23, 33) mit dem ersten Pol des zweiten Batteriemoduls (20 , 30) und ein zweiter Ausgang des zweiten DC/DC-Umsetzers (23, 33) mit dem zweiten Pol des zweiten Batteriemoduls (20, 30) verbunden sind und wobei der erste Pol des zweiten Batteriemoduls (20, 30) mit dem zweiten Pol des ersten Batteriemoduls (10) verbunden ist.

7. Die Batterie von Anspruch 6, bei der die dritte Anzahl gleich der ersten Anzahl (m) und die vierte Anzahl gleich der zweiten Anzahl (n) sind.

8. Die Batterie eines der vorhergehenden Ansprüche, bei der der erste DC/DC-Umsetzer (13) ausgebildet ist, den zweiten Batteriezellen (12) elektrische Energie zu entnehmen und den ersten Batteriezellen (11) über eine Aufladespannung zuzuführen.

9. Die Batterie von Anspruch 8, rückbezogen auf Anspruch 6, bei der der zweite DC/DC-Umsetzer (23, 33) ausgebildet ist, den vierten Batteriezellen (22, 32) elektrische Energie zu entnehmen und den dritten Batteriezellen (21, 31) über eine Aufladespannung zuzuführen.

10. Ein Kraftfahrzeug mit einem elektrischen Antriebsmotor zum Antreiben des Kraftfahrzeuges und einer mit dem elektrischen Antriebsmotor verbundenen Batterie nach einem der vorhergehenden Ansprüche.

## Claims

1. Battery having a first battery module (10), which has a first number (m) of first battery cells (11) connected in series between a first pole of the first battery module (10) and a second pole of the first battery module (10), wherein
the first battery module (10) has a first DC/DC converter (13) and a second number (n) of second battery cells (12), wherein the second battery cells (12) are connected in series directly between a first input and a second input of the first DC/DC converter (13), wherein a first output of the first DC/DC converter (13) is connected to the first pole of the first battery module (10) and a second output of the first DC/DC converter (13) is connected to the second pole of the first battery module (10) .

2. Battery according to Claim 1, in which the first battery cells (11) have a first cell voltage and the second battery cells (12) have a second cell voltage different from the first cell voltage.

3. Battery according to Claim 2, in which the first number (n) is equal to the second number (m).

4. Battery according to either of Claims 1 and 2, in which the second number (n) differs from the first number (m) .

5. Battery according to Claim 4, in which the second number (n) is smaller than the first number (m).

6. Battery according to one of the preceding claims, having at least one second battery module (20, 30), which has a third number of third battery cells (21, 31) connected in series between a first pole of the second battery module (20, 30) and a second pole of the second battery module (20, 30), wherein the second battery module (20, 30) has a second DC/DC converter (23, 33) and a fourth number of fourth battery cells (22, 32), wherein the fourth battery cells (22, 32) are connected in series between a first input and a second input of the second DC/DC converter (23, 33), wherein a first output of the second DC/DC converter (23, 33) is connected to the first pole of the second battery module (20, 30) and a second output of the second DC/DC converter (23, 33) is connected to the second pole of the second battery module (20, 30) and wherein the first pole of the second battery module (20, 30) is connected to the second pole of the first battery module (10).

7. Battery according to Claim 6, in which the third number is equal to the first number (m) and the fourth number is equal to the second number (n).

8. Battery according to one of the preceding claims, in which the first DC/DC converter (13) is designed to draw electrical energy from the second battery cells (12) and to feed it to the first battery cells (11) by means of a charging voltage.

9. Battery according to Claim 8, with reference back to Claim 6, in which the second DC/DC converter (23, 33) is designed to draw electrical energy from the fourth battery cells (22, 32) and to feed it to the third battery cells (21, 31) by means of a charging voltage.

10. Motor vehicle having an electric drive motor for driving the motor vehicle and a battery according to one of the preceding claims connected to the electric drive motor.

## Revendications

1. Batterie, comprenant un premier module de batterie (10), lequel possède un premier nombre (m) de premières cellules de batterie (11) branchées en série entre un premier pôle du premier module de batterie (10) et un deuxième pôle du premier module de batterie (10), le premier module de batterie (10) possédant un premier convertisseur CC/CC (13) et un deuxième nombre (n) de deuxièmes cellules de batterie (12), les deuxièmes cellules de batterie (12) étant branchées en série directement entre une première entrée et une deuxième entrée du premier convertisseur CC/CC (13), une première sortie du premier convertisseur CC/CC (13) étant reliée à un premier pôle du premier module de batterie (10) et une deuxième sortie du premier convertisseur CC/CC (13) à un deuxième pôle du premier module de batterie (10).

2. Batterie selon la revendication 1, avec laquelle les premières cellules de batterie (11) présentent une première tension de batterie et les deuxièmes cellules de batterie (12) une deuxième tension de batterie différente de la première tension de batterie.

3. Batterie selon la revendication 2, avec laquelle le premier nombre (n) est égal au deuxième nombre (m).

4. Batterie selon la revendication 1 ou 2, avec laquelle le deuxième nombre (n) est différent du premier nombre (m).

5. Batterie selon la revendication 4, avec laquelle le deuxième nombre (n) est inférieur au premier nombre (m) .

6. Batterie selon l'une des revendications précédentes, comprenant au moins un deuxième module de batterie (20, 30), lequel possède un troisième nombre de troisièmes cellules de batterie (21, 31) branchées en série entre un premier pôle du deuxième module de batterie (20, 30) et un deuxième pôle du deuxième module de batterie (20, 30), le deuxième module de batterie (20, 30) possédant un deuxième convertisseur CC/CC (23, 33) et un quatrième nombre de quatrièmes cellules de batterie (22, 32), les quatrièmes cellules de batterie (22, 32) étant branchées en série entre une première entrée et une deuxième entrée du deuxième convertisseur CC/CC (23, 33), une première sortie du deuxième convertisseur CC/CC (23, 33) étant reliée à un premier pôle du deuxième module de batterie (20, 30) et une deuxième sortie du deuxième convertisseur CC/CC (23, 33) à un deuxième pôle du deuxième module de batterie (20, 30) et le premier pôle du deuxième module de batterie (20, 30) étant relié au deuxième pôle du premier module de batterie (10).

7. Batterie selon la revendication 6, avec laquelle le troisième nombre est égal au premier nombre (m) et le quatrième égal au deuxième nombre (n).

8. Batterie selon l'une des revendications précédentes, avec laquelle le premier convertisseur CC/CC (13) est configuré pour prélever de l'énergie électrique des deuxièmes cellules de batterie (12) et l'acheminer aux premières cellules de batterie (11) par le biais d'une tension de charge.

9. Batterie selon la revendication 8, référée à la revendication 6, avec laquelle le deuxième convertisseur CC/CC (23, 33) est configuré pour prélever de l'énergie électrique des quatrièmes cellules de batterie (22, 32) et l'acheminer aux troisièmes cellules de batterie (21, 31) par le biais d'une tension de charge.

10. Véhicule automobile équipé d'un moteur de propulsion électrique servant à propulser le véhicule automobile et d'une batterie selon l'une des revendications précédentes reliée au moteur de propulsion électrique.
